# EUROPÄISCHE PATENTSCHRIFT

(11) **EP 3 171 487 B1**
(45) Veröffentlichungstag und Bekanntmachung des Hinweises auf die Patenterteilung: **23.01.2019**
(21) Anmeldenummer: 16198014.9
(22) Anmeldetag: 09.11.2016
(51) Int. Cl.: H02K 5/22, H02K 11/33, H01R 24/20, H01R 27/02, G05B 19/418, H02K 5/14, H01R 107/00

(54) **ANTRIEBSSYSTEM UND HYBRIDSTECKERSYSTEM FÜR EIN ANTRIEBSSYSTEM**
DRIVE SYSTEM AND HYBRID CONNECTOR SYSTEM FOR A DRIVE SYSTEM
SYSTÈME D'ENTRAÎNEMENT ET SYSTÈME DE CONNECTION HYBRIDE POUR SYSTÈME D'ENTRAÎNEMENT

(30) Priorität: 20.11.2015 DE 102015222982
(43) Veröffentlichungstag der Anmeldung: 24.05.2017
(60) Teilanmeldung: 18208949.0
(73) Patentinhaber: Baumüller Nürnberg GmbH, 90482 Nürnberg (DE)
(72) Erfinder: BORMUTH, Bernd, 90482 Nürnberg (DE); SCHRÖDEL, Georg, 90459 Nürnberg (DE)
(74) Vertreter: FDST Patentanwälte

(56) Entgegenhaltungen:
- EP-A2- 2 587 642
- DE-A1-102009 031 466
- DE-A1-102011 118 359
- DE-A1-102011 118 360
- DE-U1-202013 105 359
- US-A1- 2014 156 091

## Beschreibung

Die Erfindung betrifft ein Antriebssystem mit einer Anzahl von elektromotorischen Antrieben, insbesondere Servoantrieben, und mit mindestens einem Hybridkabel zur strom- und datentechnischen Verbindung benachbarter Antriebe, gemäß dem Oberbegriff des Anspruchs 1. Ein derartiges Antriebssystem ist beispielsweise aus der EP 2 587 642 A2 bekannt.

Aus der DE 20 2013 105 359 U1 ist zudem ein Steuerungssystem für Servoantriebe mit einer Steuereinheit bekannt, mit welcher mindestens zwei Antriebe über Hybridkabel in Reihe geschaltet sind, um elektrischen Strom für die Antriebe und eine Datenverbindung zwischen der Steuereinheit und den Antrieben zur Verfügung zu stellen.

Bei dem erfindungsgemäßen Antriebssystem, bei welchem eine Anzahl von elektromotorischen Antrieben (Servoantrieben), d. h. insbesondere deren Leistungs- und Steuerelektronik oder Umrichter über Hybridkabel zur Strom- und Datenübertragung miteinander verbunden oder verbindbar sind, weist der jeweilige Antrieb ein Motorgehäuse zur Aufnahme des Elektromotors, d. h. dessen Motorkomponenten (Stator, Rotor und ggf. Sensor-/Messeinrichtung (Resolver) zur Winkel- und Drehzahlerfassung) und ein, vorzugsweise als Gehäusehalbschale ausgeführtes, Umrichter- oder Elektronikgehäuse zur Aufnahme einer Leiterplatte der Leistungs- und/oder Steuer- bzw. Regelelektronik auf.

Das vorzugsweise als Gehäusehalbschale oder halbschalenartig ausgeführte Umrichter- bzw. Elektronikgehäuse des Antriebs überragt dessen Motorgehäuse stirnseitig, insbesondere an der B-Seite, mit einem Gehäuseabschnitt. In diesem ist ein Leiterplattenabschnitt der Leiterplatte angeordnet. Auf oder an diesem Leiterplattenabschnitt der Antriebs- oder Umrichterelektronik ist ein Gegensteckergehäuse (Steckergehäuse) eines Gegensteckerpaars mit leiterplattenseitig kontaktierten Stromanschlüssen und Daten- und/oder Signalanschlüssen montiert. Dabei sind zur Stromführung vorzugsweise Stromschienen vorgesehen, die in das Gegensteckergehäuse des Gegensteckerpaars integriert sind und eine Durchkontaktierung zwischen den beiden Gegensteckern des Gegensteckerpaars herstellen. Die Gegenstecker sind zur Steckverbindung und Steckkontaktierung mit einem zugeordneten Hybridsteckersystem (Hybridstecker- oder Hybridkabelbrücke) vorgesehen und eingerichtet, d. h. mit dessen jeweiligen Anschlussstecker, der an ein Hybridkabel mit Strom- und Daten- oder Signalleitungen kabelendseitig montiert ist.

Die jeweilige Stromschiene weist einen als Durchkontaktierung wirksamen Schienenabschnitt sowie den Gegensteckern jeweils zugeordnete Anschlusskontakte, vorzugsweise in Form von Steckanschlüssen (Steckzungen), und einen leiterplattenseitigen Anschlusskontakt auf. Die Durchkontaktierung erfolgt somit vorteilhafterweise nicht leiterplattenseitig, also auf der Leiterplatte der Elektronik, sondern vielmehr innerhalb des Gegensteckerpaars bzw. innerhalb dessen Steckergehäuses. Die jeweilige Stromschiene ist oder wirkt dabei quasi als T-Stück, dessen Vertikalende als Leiterplattenkontakt dient, während die Horizontalenden die Steckanschlusskontakte (Steckeranschlüsse) bilden.

Infolge der Integration der oder jeder Stromschiene in das den Gegensteckern des Gegensteckerpaars vorzugsweise gemeinsame und zweckmäßigerweise als Spitzgussteil aus Kunststoff hergestellte Gegensteckergehäuse, in welches die Stromschienen bzw. deren entsprechender Stromschienenabschnitt geeigneterweise eingegossen ist, ragen die Steckanschlüsse zur Kontaktierung mit den korrespondierenden Anschlüssen des zur Herstellung der Steckverbindung zugeordneten Hybridsteckers auf der der Leiterplatte, d. h. der dem Elektronik- oder Umrichter-(Halbschalen)-Gehäuse abgewandten Gehäuseseite (unter Bildung des mit dem Hybridstecker korrespondierenden Steckgesichtes) aus der Kunststoffumspritzung des Gegensteckergehäuses heraus. Dieses, dem Gegensteckerpaar gemeinsame Gegensteckergehäuse ist auf dem Leiterplattenabschnitt der Antriebselektronik (Umrichter mit Leistungs- und Steuerelektronik) angeordneten und montiert, und die steckerseitigen Strom- und Datenanschlüsse sind dort (elektrisch) kontaktiert.

Das Motorgehäuse des jeweiligen Antriebs überragt (flachdachartig) die Geber- oder B-Seite des Elektromotors, so dass dort stirnseitig, also an der entsprechenden Motor- oder Motorgehäuseschmalseite ein Anschlussabschnitt des Motorgehäuses gebildet ist. Dieser Anschlussabschnitt des Motorgehäuses überdeckt den entsprechenden Gehäuseabschnitt mit dem sich in diesen erstreckenden Leiterplattenabschnitt des Umrichter- oder Elektronikgehäuses und ist mit diesem, vorzugsweise gehäusedicht, verbunden, beispielsweise (unter Zwischenlage eines Dichtelementes) verschraubt. Das Umrichter- oder Elektronikgehäuses erstreckt sich auf der entsprechenden Motorseite des Antriebs (Antriebsseite) geeigneterweise entlang des gesamten Motorgehäuses.

Der den Gehäuseabschnitt des Umrichter- oder Elektronikgehäuses überdeckende Anschlussabschnitt des Motorgehäuses weist anschluss- und/oder steckerseitig eine dachartig ausgebildete Steckfläche auf. Mit anderen Worten sind zwei in einem stumpfen Winkel (Neigungswinkel) stehende Steckflächenbereiche mit einander abgeneigten Flächennormalen derart gebildet, dass zwischen den hybridkabelseitigen Steckern (Anschlusssteckern der Hybridbrücke) in der Steckverbindung mit den Gegensteckern dieses Antriebs ein spitzer Winkel (Zwischenspaltwinkel) gebildet ist, wobei die beiden hybridkabelseitigen Anschlussstecker gegeneinander V-förmig verkippt oder geneigt (angeordnet bzw. positioniert) sind.

Der genannte und beschriebene motorseitige Anschlussabschnitt des Motorgehäuses des jeweiligen Antriebs ist anschluss- und steckerseitig im Bereich der dachartig ausgebildeten Steckfläche vom Gegensteckergehäuse (bzw. vom Gegensteckerpaar) derart durchgriffen, dass deren gegeneinander dachartig geneigten Gegenstecker über diesen motorseitigen Anschlussabschnitt zur Steckverbindung mit einzeln oder paarweise steckbaren Hybridsteckern hybridkabelseitigen Anschlusssteckeren) zugänglich sind.

Die nachfolgend auch als Hybridsteckersystem oder einfach als Hybridstecker bezeichnete Hybridbrücke umfasst ein Hybridkabel und an zumindest einem Kabelende, vorzugsweise an beiden Kabelenden, einen Anschlussstecker mit in einem Steckergehäuse angeordneten Anschlusskontakten zur Strom- und Datenübertragung auf. Die Hybridbrücke ist für das Antriebssystem oder innerhalb eines Antriebssystems mit einer Anzahl von elektromotorischen Antrieben, insbesondere Servoantrieben, geeignet.

In vorteilhafter Ausgestaltung ist das Hybridkabel als Flachkabel ausgeführt. Das Hybridkabel ist vorteilhafterweise bogenförmig, insbesondere mit zueinander V-förmig oder keilförmig verlaufenden Bogenschenkeln, ausgebildet und/oder in diese Bogenform verbringbar. Die Flachkabelausführung ermöglicht vorteilhafterweise eine besonders enge Anordnung der Antriebe zu- oder nebeneinander, insbesondere auch bei deren Anordnung entlang eines Kreisumfangs oder eines Kreisbogens, auch bei vergleichsweise engen Radien.

Insbesondere bei einer solchen kreis- oder kreisbogenförmigen Antriebsanordnung ist die Kombination mit dachartig angestellten Steckflächen der, vorzugsweise paarweisen, Gegenstecker an oder auf dem antriebsseitigen Motorgehäuseabschnitt ist der Hybridstecker (die Hybridbrücke) mit Flachkabelausführung besonders vorteilhaft, da mit den in einem Neigungswinkel angestellten Steckflächen in der Gesamtheit eine besonders vorteilhafte Anpassung mehrerer kreisförmig angeordneter Antriebe an die Kreisform gegeben ist. Mit anderen Worten können die Antriebe entlang eines Kreisbogens, jedoch auch in einer geraden Reihenanordnung, aufgrund des besonders raumsparenden Aufbaus des Hybridsteckersystems sowie der ggf. geneigten Steckflächen der antriebsseitigen Gegenstecker besonders eng nebeneinander und somit in einem besonders geringen Abstand zueinander positioniert werden.

Des Weiteren ist das Steckergehäuse des oder jedes Anschlusssteckers des Hybridsteckers zusätzlich oder alternativ als vorzugsweise einteiliges Kunststoffgehäuse mit einer Anzahl von Gehäusekammern zur Aufnahme des oder jedes Anschlusskontaktes zur Strom- und/oder Datenübertragung ausgeführt. Das Steckergehäuse ist ferner zusätzlich oder alternativ im Wesentlichen rechteckig, insbesondere mit einem im Wesentlichen rechteckigen Gehäusequerschnitt, ausgeführt.

Zudem kann das Hybridkabel zusätzlich oder alternativ kabelendseitig mit einer zur Abdichtung und/oder als Zugentlastung wirksamen, insbesondere als Kunststoffumspritzung ausgeführten Umspritzung versehen sein, welche sich vorteilhafterweise in das Steckergehäuse hinein erstreckt und/oder dieses zumindest bereichsweise um- und/oder übergreift.

Bei dem Antriebssystem, bei dem das Gegensteckerpaar und/oder deren Gegenstecker zur Steckverbindung mit hybridkabelseitig montierten Hybrid-Anschlusssteckern vorgesehenen und eingerichtet sind, ist die Steckfläche eines der Gegenstecker gegenüber derjenigen des anderen Gegensteckers in einem stumpfen Winkel unter Bildung einer dachartigen (nach Art eines Satteldaches) Gesamtsteckfläche geneigt. Diese dachartige Gesamtsteckfläche ist antriebsseitig und dort an einem Motorgehäuseabschnitt vorgesehen, in welchen ein Leiterplattenabschnitt oder -bereich der Elektronik (Antriebs- oder Umrichterelektronik) des elektromotorischen Antriebs aufgenommen ist, mit welchem Leiterplattenabschnitt das Gegensteckerpaar unter Bereitstellung einer Durchkontaktierung, insbesondere zur Stromführung, kontaktiert ist.

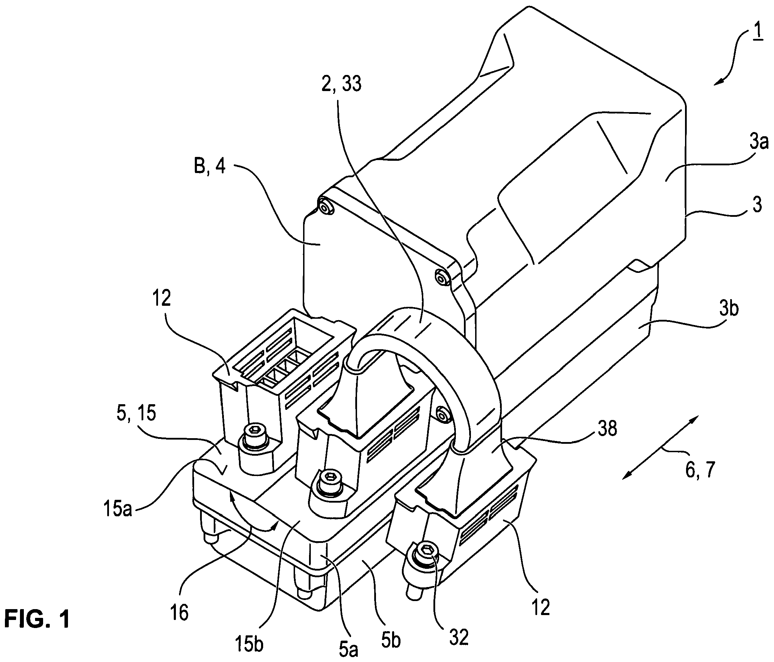

Nachfolgend werden Ausführungsbeispiele der Erfindung anhand einer Zeichnung näher erläutert. Dabei sind in allen Figuren 1 bis 11 gleiche Teile stets mit gleichen Bezugszeichen versehen.

Fig. 1 zeigt einen einzelnen Antrieb 1, der geeigneterweise innerhalb eines Antriebssystems mit mehreren solchen Antrieben 1 über eine nachfolgend als Hybridbrücke 2 bezeichnete Hybridstecker- oder Hybridkabelbrücke stromtechnisch, insbesondere gleichstromtechnisch, und daten- oder signaltechnisch mit einem benachbarten Antrieb 1 und/oder mit einer (übergeordneten) Versorgungs- und/- oder Steuereinheit (Verteiler) gekoppelt ist. Die Stromversorgung des oder jedes Antriebs 1 erfolgt zweckmäßigerweise über einen Gleichstromzwischenkreis (Zwischenkreis), welcher beispielsweise eine 24V-Gleichspannung und einen entsprechenden Gleichstrom für ein antriebsseitiges Leistungsteil (Leistungselektronik) liefert.
Der oder jeder Antrieb 1 ist ein elektromotorischer Antrieb mit einem vorzugsweise bürstenlosen Elektromotor, dessen zweckmäßigerweise statorseitige, insbesondere dreiphasige, Drehstromwicklung vom Leistungsteil (beispielsweise mittels Halbleiterschaltern (IGBT's) in Brückenschaltung) energetisch versorgt (bestromt) wird. In dieser Ausführungsform ist der auf einer Motorwelle wellenfest angeordnete Rotor geeigneterweise mit Permanentmagneten bestückt.
Bei einer besonders geeigneten Ausführung des Antriebs 1 als Servoantrieb umfasst dieser zusätzlich zum (bürstenlosen) Elektromotor und einem das Leistungsteil (Leistungselektronik) umfassenden Umrichter (Servoumrichter) eine Steuerelektronik, die geeigneterweise Regelungs- und Sollwertgenerierungs- sowie Überwachungsfunktionalitäten aufweist. Das Leistungsteil bzw. die Leistungselektronik und die Steuerelektronik werden nachfolgend auch als Antriebselektronik oder einfach als Elektronik bezeichnet. Diese Elektronik umfasst insbesondere eine elektronische Lage-, Geschwindigkeits- und/oder Momentenregelung, wozu der Elektromotor des Antriebs 1 vorzugsweise mit einem Resolver ausgerüstet bzw. dem Elektromotor ein solcher zugeordnet ist.
Der Antrieb 1 umfasst ein Antriebsgehäuse 3, welches vorzugsweise und dabei besonders vorteilhaft lediglich aus einem Motorgehäuse 3a und einem vorzugsweise halbschalenartigen Elektronikgehäuse 3b zusammengesetzt oder aufgebaut ist. In das Motorgehäuse 3a sind die Komponenten des Elektromotors, gegebenenfalls inkl. Resolver, und vorzugsweise inkl. Wellenlager, integriert bzw. darin angeordnet. Das Antriebsgehäuse 3 weist einen sich über eine Motorstirnseite (Stirnseite) B, vorzugsweise einen B-seitigen Lagerschild, Lager- oder Motordeckel oder Lager- oder Motorflansch 4 des Elektromotors, hinaus erstreckenden, insbesondere stufen- oder podestartig abgesetzten oder eingezogenen Gehäuseabschnitt oder -bereich 5 auf. Das Motorgehäuse 3a weist hierzu einen Anschlussabschnitt 5a auf und erstreckt sich geeigneterweise über eine (bodenseitige) Antriebslängsseite 6 des Antriebs 1. Mit dieser Antriebslängsseite 6 korrespondiert eine Gehäuselängsseite 7 des Elektronikgehäuses 3b. Das Elektronikgehäuse 3b verschließt somit im Montagezustand die Antriebslängsseite 6 des Motorgehäuses 3a inkl. dessen Anschlussabschnitt 5a.

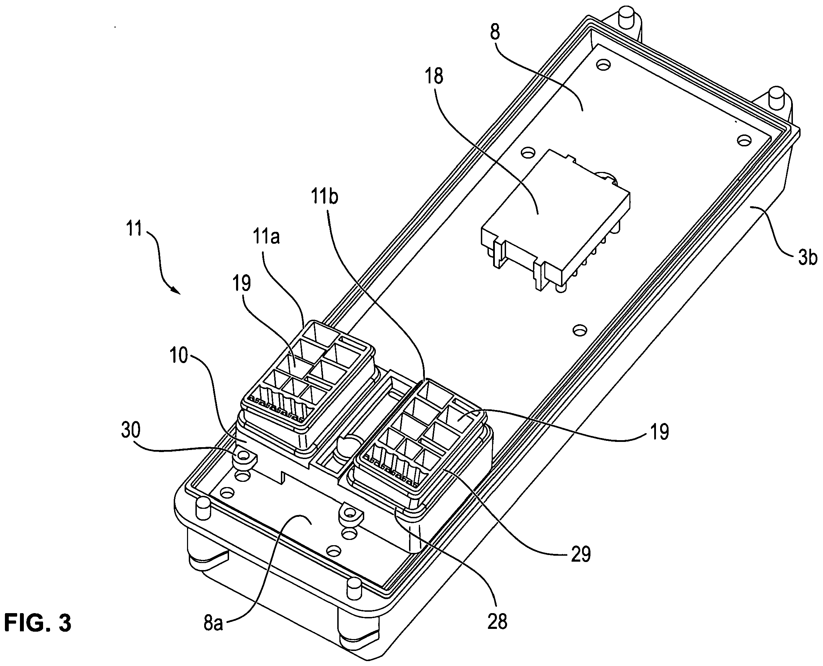

Wie in Verbindung mit Fig. 3 erkennbar ist, ist innerhalb des Elektronikgehäuses 3b eine Leiterplatte 8 der Elektronik angeordnet oder aufgenommen, welche Leiterplatte 8 einen Leiterplattenabschnitt 8a aufweist. Mit diesem Leiterplattenabschnitt 8a erstreckt sich die Leiterplatte 8 in den Antriebsgehäuseabschnitt 5. Dieser ist gebildet aus dem Anschlussabschnitt bzw. Anschlussbereich 5a des Motorgehäuses 3a und einem korrespondierenden Gehäuseabschnitt 5b des Elektronikgehäuses 3b.

Wie wiederum in Fig. 3 erkennbar ist, ist der Leiterplattenabschnitt 8a der Leiterplatte 8 der Elektronik zur Montage eines Gegensteckergehäuses 10 eines Gegensteckerpaares 11 mit zwei Gegensteckern 11a und 11b sowie zur Kontaktierung deren Stecker- und/oder Anschlusselemente vorgesehen und eingerichtet. Diese Gegenstecker 11a, 11b korrespondieren mit Anschlusssteckern 12 einer jeweiligen Hybridbrücke 2 oder mit einem vorzugsweise gleichartigen Anschlussstecker 12 eines in Fig. 1 nicht dargestellten Hybridkabels zum Anschluss an die übergeordnete Steuereinheit. In Fig. 1 ist der der übergeordneten Steuereinheit zugeordnete Anschlussstecker 12 ohne Hybridkabel dargestellt.

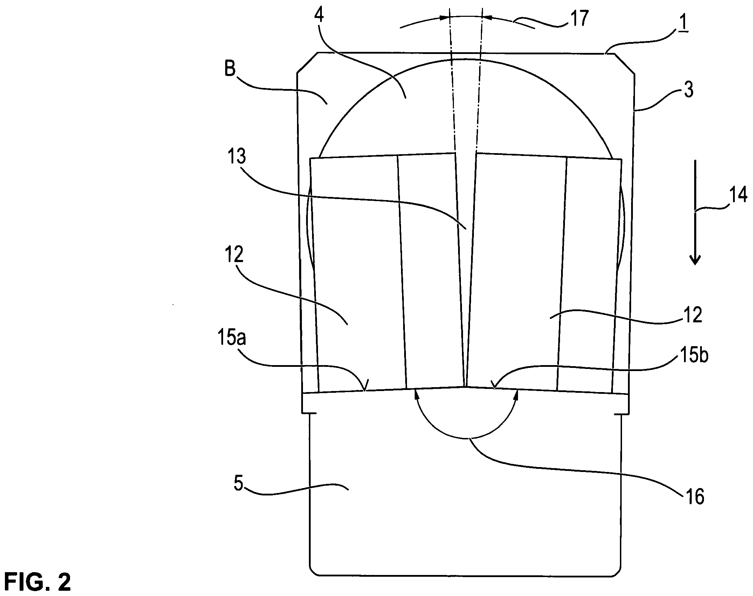

Fig. 2 zeigt den Antrieb 1 in stirnseitiger Ansicht mit Blick auf dessen (B-seitigen) Antriebsgehäuseabschnitt 5 und dessen motorgehäuseseitigen Anschlussabschnitt 5a mit gesteckten Anschlusssteckern 12 von ein oder zwei Hybridbrücken 2 oder einer Hybridbrücke 2 und einem zur übergeordneten Steuereinheit führenden Hybridkabel inkl. Anschlussstecker 12. Erkennbar ist, dass die beiden Anschlussstecker 12 unter Bildung eines V-förmigen Zwischenspalts 13 gegenüber einer (vertikalen) Steckrichtung 14 schräggestellt positioniert sind. Diese Schrägstellung der Anschlussstecker 12 wird bewirkt durch eine satteldachartige Gesamtsteckfläche 15 des Anschlussabschnitts 5a mit zwei Steckflächen 15a und 15b für den jeweiligen Anschlussstecker 12, so dass die Flächennormalen der Steckflächen 15a und 15b einander abgeneigt sind und somit (zueinander) ebenfalls V-förmig verlaufen. Der Steckflächenwinkel 16 zwischen den beiden Steckflächen 15a und 15b beträgt beispielsweise 170°, so dass der Zwischenspaltwinkel 17 zwischen den gesteckten Anschlusssteckern 12 entsprechend 10° beträgt.

Dieser Steckflächen- und Zwischenspaltwinkel 16 bzw. 17 ist besonders vorteilhaft an einen gewünschten, bestimmten oder gewählten Radius eines Anordnungskreises oder -kreisbogenabschnitts angepasst, auf oder entlang welchem mehrere Antriebe 1 (azimutal nebeneinander) angeordnet bzw. positioniert sind. Je nach diesem Kreisradius der Antriebsanordnung innerhalb eines Antriebssystems kann somit der Steckflächenwinkel 16, d. h. der Steckflächenneigungswinkel gegenüber der Vertikalen und/oder Steckrichtung 14 größer oder kleiner als 170° gewählt oder bemessen werden. Zweckmäßigerweise korrespondieren die Neigungswinkel der die Gegenstecker 12 bildenden Gehäuseabschnitte des Gegensteckergehäuses 10 mit dem Steckflächenwinkel 16, sind also - bezogen auf die Darstellung des Antriebs 1 in Fig. 2 - ebenfalls um jeweils 5° aus der Horizontalen nach außen abfallend geneigt ausgebildet.

Der Winkel 17 des V-förmigen Zwischenspalts 13 zwischen den angeschlossenen und/oder montierten Anschlusssteckern 12 beträgt somit im Ausführungsbeispiel 10°, wobei jeder der Anschlussstecker 12 gegenüber der vertikalen Steckrichtung 14 und insbesondere gegenüber einer hierzu parallelen Anordnung/Ausrichtung der Anschlussstecker 12 um jeweils 5° (in der Darstellung gemäß Fig. 2 nach links bzw. rechts) geneigt oder schräggestellt ist.

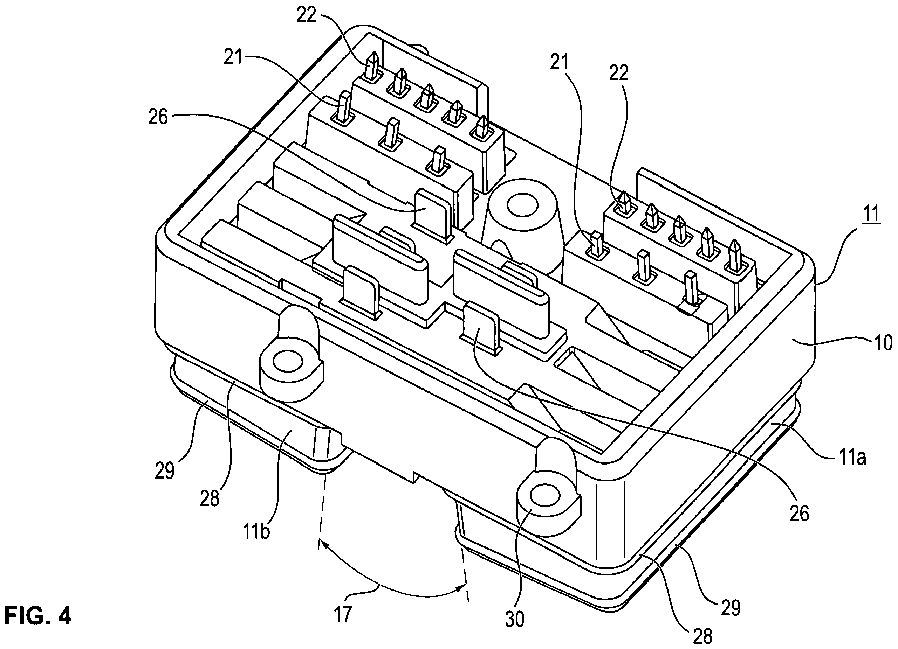

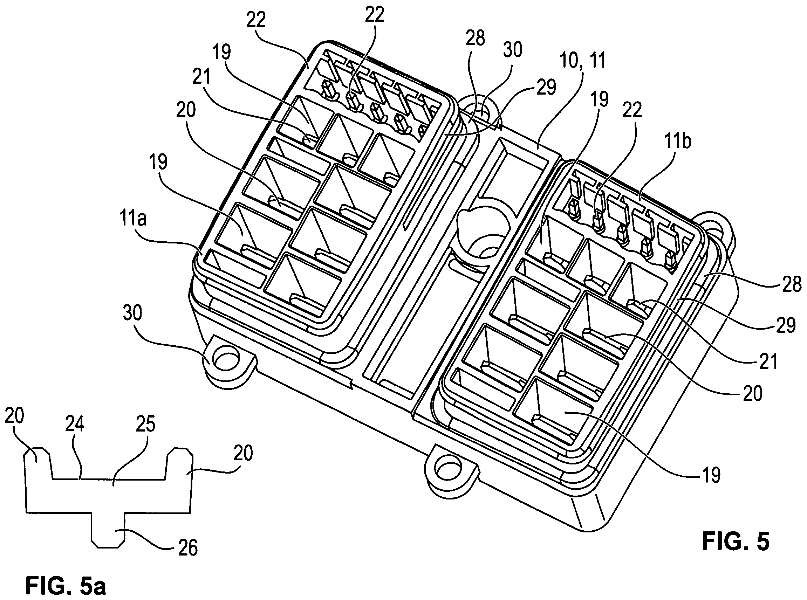

Die Fig. 4 und 5 zeigen das Gegensteckerpaar 11 mit dem Gegensteckergehäuse 10 von der der Leiterplatte 8 bzw. dem Leiterplattenabschnitt 8a zugewandten Gehäuserückseite (Montageseite) bzw. von der den Anschlusssteckern 12 zugewandten Anschlussseite mit dem gezeigten Steckgesicht. Wie in Verbindung mit Fig. 3, in welcher auch das Leistungsteil 18 der Motor- oder Antriebselektronik dargestellt oder zumindest angedeutet ist, weist das Gegensteckergehäuse 10 eine Anzahl von Gehäusekammern 19 auf. In diesen sind die Gegensteckkontakte der Gegenstecker 11a, 11b angeordnet. Hierbei handelt es sich um Gehäusekammern 19 für stromführende Anschlüsse 20, vorzugsweise in Form von Steckzungen. Weitere Anschlüsse 21 in entsprechenden Gehäusekammern 19 dienen als Reserveanschlüsse. Eine oder mehrere weitere Gehäusekammern 19 dienen zur Aufnahme von Datenübertragungsanschlüssen 22.

Die nachfolgend auch als Stromanschlüsse bezeichneten stromführenden Anschlüsse 20 sind Bestandteil von in Fig. 5a beispielhaft dargestellten Stromschienen 24. Die Stromschiene 24 weist einen als Durchkontaktierung zwischen den beiden Gegensteckern 11a und 11b dienenden (wirksamen) Stromschienenabschnitt 25 auf. Die Stromschiene 24 ist prinzipiell als T-Stück ausgeführt, dessen horizontaler Schenkel den Stromschienenabschnitt 25 mit den endseitigen Stromanschlüssen 20 bildet. Diese sind, vorzugsweise entsprechend dem Zwischenspaltwinkel 17, V-förmig ausgestellt. Zwischen diesen beiden Stromanschlüssen 20 ist auf der gegenüberliegenden Seite des Stromschienenabschnitts 25 ein Leiterplattenanschluss 26 vorgesehen, der quasi den vertikalen T-Schenkel der Stromschiene 24 bildet. Der jeweilige Leiterplattenanschluss 26 der jeweiligen Stromschiene 24 ist in Fig. 4 erkennbar und ragt auf der dort gezeigten Unter- oder Rückseite des Gegensteckergehäuses 10 heraus.

Die Stromschienen (Kontaktschienen) 24 sowie vorzugsweise oder gegebenenfalls die weiteren Anschlüsse, d. h. die Datenübertragungsanschlüsse 21 sowie die Reserveanschlüsse 22 ragen gehäuserückseitig des Gegensteckergehäuses 10 ebenfalls heraus. Die Stromschienen 24 sind in das geeigneterweise aus Kunststoff bestehende Gegensteckergehäuse 10 eingegossen bzw. vom entsprechenden Kunststoffmaterial derart umspritzt, dass die stromführenden Anschlüsse 20 innerhalb der Gehäusekammern 19 und auf der Gehäuserückseite des Gegensteckergehäuses (Steckergehäuse) 10 aus dem Kunststoffmaterial und somit herausragen. Dies gilt gegebenenfalls auch für die weiteren Anschlüsse 21, 22 der Gegenstecker 11a, 11b.

Aus den Fig. 3 bis 5 ist zudem erkennbar, dass das Gegensteckergehäuse 10 im Bereich deren Gegenstecker 10a und 10b mit axialen und radialen Dichtelementen als Axialdichtungen 28 und Radialdichtungen 29 der Gegenstecker 11a und 11b versehen sind. Hierzu ist das Gegensteckergehäuse 10 geeigneterweise im Zwei-Komponenten-Kunststoff (2K-Kunststoff) mit geeignet flexiblem oder elastischem Kunststoffmaterial der Axial- und Radialdichtungen 28 bzw. 29 im Kunststoffspritzverfahren hergestellt.

Aus den Fig. 3 bis 5 ist des Weiteren erkennbar, dass das Gegensteckergehäuse 10 eine Anzahl von, vorzugsweise zwei Schraub- oder Gewindelaschen 30 aufweist, welcher mit korrespondierenden Schraublaschen 31 der Anschlussstecker 12 zur Aufnahme von Schrauben 32 für eine Schraubbefestigung der Anschlussstecker 12 am Gegensteckergehäuse 10 korrespondieren, so dass deren Laschenöffnungen zur Aufnahme der jeweiligen Schraube 32 miteinander fluchten.

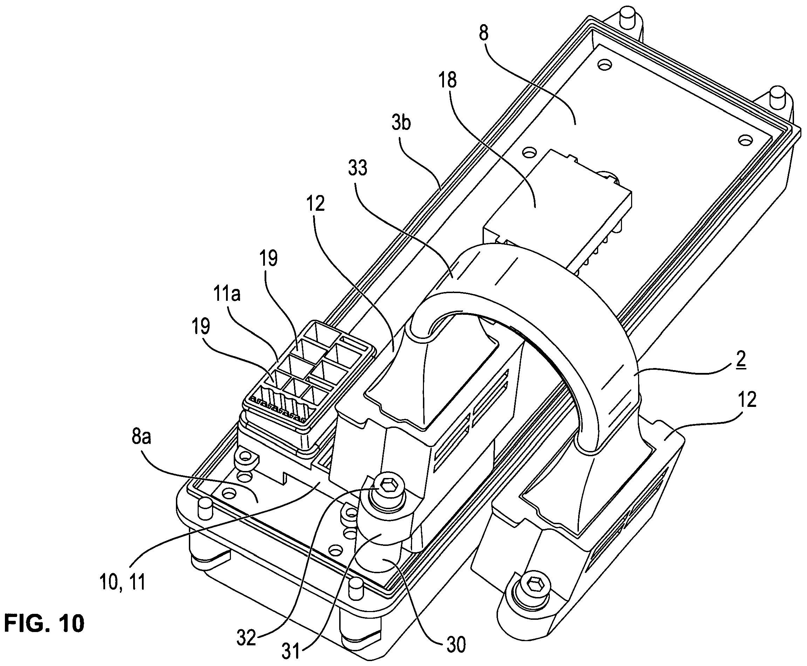

Die Schraubbefestigung der Steckkontaktierung oder Steckverbindung zwischen den Anschlusssteckern 12 und dem Gegensteckerpaar 11 bzw. dessen Gegensteckern 11a, 11b ist in Fig. 1 ersichtlich und insbesondere in Fig. 10 veranschaulicht, welche das Antriebssystem 1 ohne Motorgehäuse 3a und ohne Elektromotor inkl. Motorkomponenten und lediglich das halbschalenförmige Elektronikgehäuse 3b mit einliegender Leiterplatte 8 inkl. Gegensteckerpaar 11 bzw. Gegensteckergehäuse 10 zeigt.

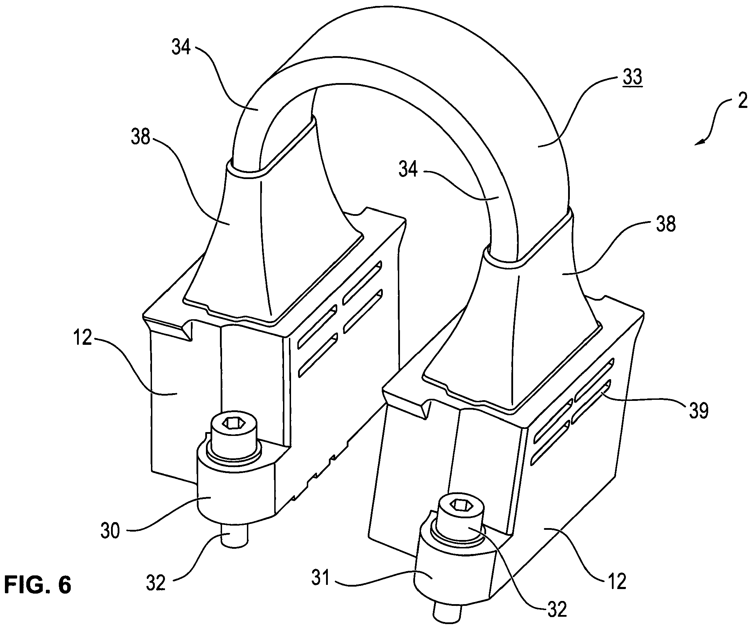

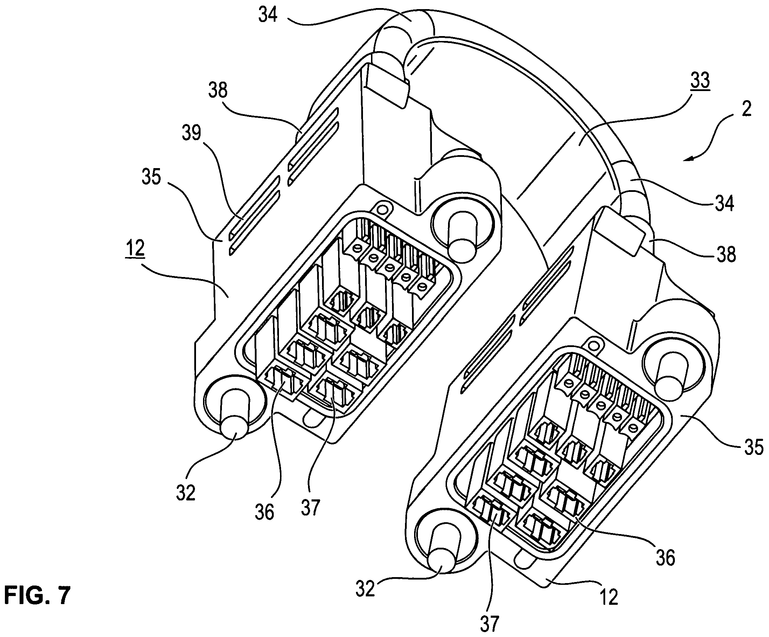

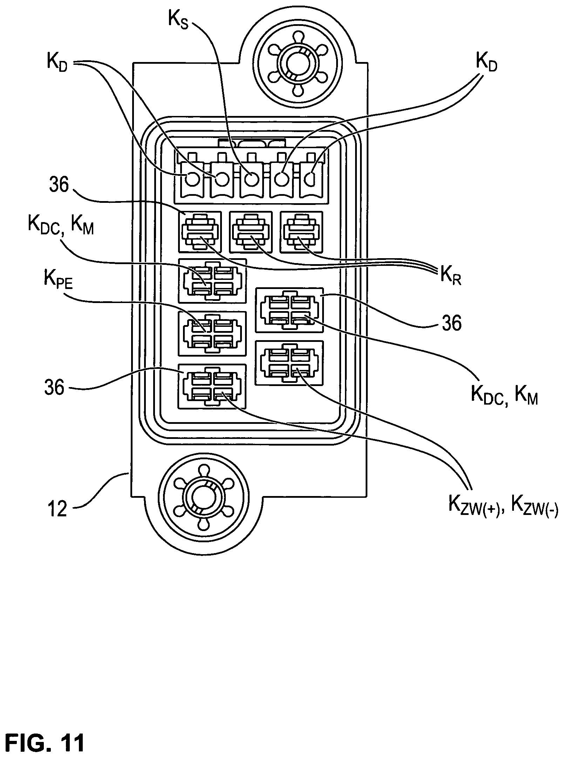

Die Fig. 6 und 7 zeigen die Hybridbrücke 2 in unterschiedlichen perspektivischen Darstellungen. Dabei ist in Fig. 7 eine Darstellung mit Blick auf das Steckergesicht des jeweiligen Anschlusssteckers 12 dargestellt. Fig. 11 zeigt eine Draufsicht auf das Steckergesicht des Anschlusssteckers 12 mit vorzugsweise folgender Steckerbelegung. Mit K_{DC} ist der (positive) 24V-Gleichspannungsanschluss zur Bestromung der Motorwicklung des Elektromotors und mit K_{M} der entsprechende Masseanschluss bezeichnet. Mit K_{ZW(+)} und K_{ZW(-)} sind der positive und negative Zwischenkreisanschluss bezeichnet. Mit K_{PE} ist der Schutzleiter (Protective Earth) bezeichnet. Innerhalb der Kontakt- oder Anschlussleiste für die Datenübertragung mit den Übertragungskontakten K_{D} ist in Fig. 11 mit Ks ein Schirmanschluss (Abschirmung) bezeichnet. Die Reservekontakte sind mit K_{R} bezeichnet.

Die genannten K-Anschlüsse sind in der Steckverbindung mit den Anschlüssen 20, 21, 22 des jeweiligen Gegenstecker 11a, 11b elektrisch verbunden. Über die Hybridbrücke 2 erfolgt dann die elektrische Verbindung zum Gegenstecker 11a, 11b eines benachbarten Antriebs 1. Dabei erfolgt lediglich über die Stromschienen 24 eine Durchkontaktierung (elektrische Verbindung) zu den Stromanschlüssen 20 des anderen Gegensteckers 11b, 11a und über diesen sowie über die Hybridbrücke 2 die elektrische Verbindung mit dem benachbarten Antrieb 1. Die derart verbundenen Antriebe 1 sind daher bezüglich der Stromführung parallel geschaltet.

Vorzugsweise werden analog auch die Daten und Signale über die Gegensteckerpaare 11 der Antriebe 1 durchkontaktiert und über die Hybridbrücke 2 von einem Antrieb 1 zum nächstfolgenden Antrieb 1 durchgeschleift. Hierzu sind dann auch die entsprechenden Anschlüsse 21 und 22 zur Durchkontaktierung zwischen den Gegensteckern 11a, 11b, vorzugsweise wiederum T-schienenartig, ausgebildet.

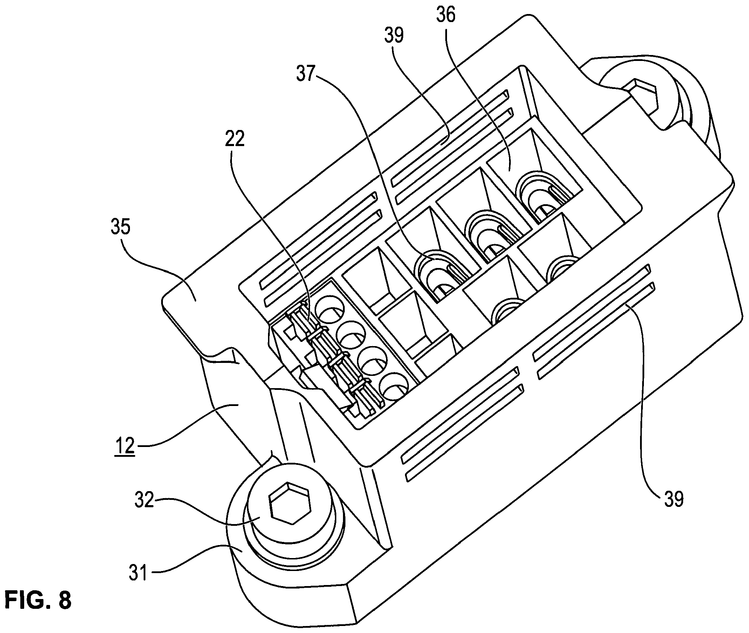

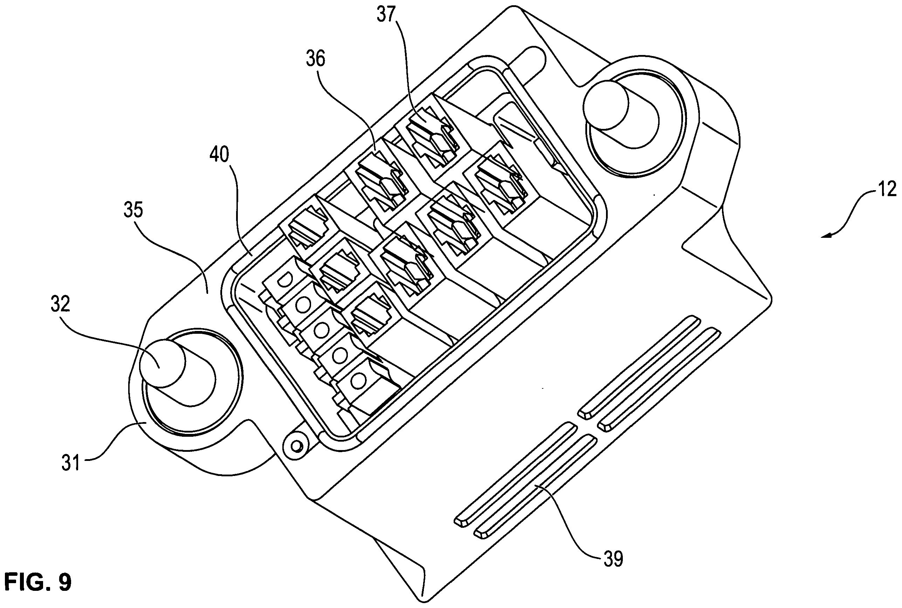

Die Fig. 8 und 9 zeigen jeweils den Anschlussstecker 12 mit Blick auf dessen kabelseitige Anschlussseite (Fig. 8) bzw. mit Blick auf das mit den Gegensteckern 11a, 11b korrespondierende Steckergesicht mit der Steckerbelegung gemäß Fig. 7.

Die Hybridbrücke (der Hybridstecker) 2 umfasst im Ausführungsbeispiel zwei Anschlussstecker 12 und ein Hybridkabel 33, das als Flachkabel ausgeführt ist. Das Hybrid-Flachkabel 33 weist einen Kabelmantel auf, der in nicht näher dargestellter Art und Weise eine Anzahl von Strom- und Datenübertragungsleitungen ummantelt. Die Anschlussstecker 12 sind kabelendseitig montiert, wobei im Ausführungsbeispiel beidendseitig an den Kabelenden jeweils einer der Anschlussstecker 12 vorgesehen ist.

Das Hybrid-Flachkabel 33 verläuft zwischen den beiden Anschlusssteckern 12 bogenförmig. Diese Bogenform des Hybrid-Flachkabels 33 ist geeigneterweise vorgeprägt. Dies bedeutet, dass die Hybridbrücke 2 in der dargestellten Form mit der entsprechenden Bogenform des Hybrid-Flachkabels 33 bereitgestellt ist. Die Bogenschenkel 34 der Hybridbrücke 2 bzw. dessen U- oder hufeisenförmig gebogenes Hybrid-Flachkabels 33 können zueinander parallel oder bereits unter Herstellung des V-förmigen Zwischenspaltwinkels einander zugeneigt sein.

Die Hybridbrücke 2 ist somit besonders raumsparend und ermöglicht eine besonders enge und entsprechend raumsparende Anordnung der Antriebe 1 des Antriebssystems mit entsprechend kleinen oder geringen Abständen zwischen benachbarten Antrieben 1. Die Ausführung des Hybridkabels 33 als Flachkabel ermöglicht vorteilhaft dessen Biegung mit einem, insbesondere im Vergleich zu einem als Rundkabel ausgeführten Hybridkabel, besonders geringen Biegeradius.

Die Anschlussstecker 12 weisen ein vorzugsweise rechteckförmiges Steckergehäuse 35 auf, das zweckmäßigerweise als Kunststoffspritzteil ausgeführt ist. Geeigneterweise weist das Steckergehäuse 35 eine Anzahl von Kontaktkammern oder Gehäusekammern 36 auf, welche die Steckerkontakte 37, d. h. die K-Anschlüsse (Fig. 11) der Anschlussstecker 12 aufnehmen. Diese Gehäusekammern 36 sind vorzugsweise domartig als Kammerdome ausgeführt, deren Außenabmessungen derart an die Innenabmessungen der Gehäusekammern 19 der Gegenstecker 11a, 11b angepasst sind, dass diese Gehäusekammern 19 die korrespondierenden Gehäusekammern 36 der Anschlussstecker 12 im Steckverbund (in der Steckverbindung) aufnehmen.

Die Steckerkontakte 37 zumindest für (die) stromführenden Anschlüsse sind geeigneterweise als zweischenkelige Federkontakte ausgeführt, wie dies insbesondere in Fig. 9 erkennbar ist. Wie aus Fig. 8 erkennbar ist, sind gegenüberliegend, also steckerrück- oder anschlussseitig die Steckerkontakte 37 mit Crimpfahnen als Crimpanschlüsse ausgeführt. Über diese Crimpfahnen werden die Leitungsenden der Leiteradern des Hybrid-Flachkabels 33 (kraftschlüssig) crimpkontaktiert.

In der Steckverbindung der Anschlussstecker 12 mit den korrespondierenden Gegensteckern 11a, 11b gleiten deren als Steckzungen ausgebildeten Stromanschlüsse 20 kontaktierend zwischen die Federschenkel der Federanschlussklemmen (Anschlussfederklemmen) des entsprechenden Anschlusssteckers 12.

Im Kabelendbereich ist das Hybrid-Flachkabel 33 mit einer als Abdichtung und Zugentlastung wirksamen, nachfolgend als Dichtmanschette 38 bezeichneten Umspritzung versehen. Diese bzw. das Umspritzungsmaterial erstreckt sich in das Steckergehäuse 35 des jeweiligen Anschlusssteckers 12 hinein. Im Steckergehäuse 35 sind, fenster- oder schlitzartige Aussparungen 39 vorgesehen, in welche das Umspritzungsmaterial eingreift. Vorteilhafterweise übergreift die Manschette bzw. die Umspritzung 38 das Steckergehäuse 35 zumindest bereichsweise und deckt dabei vorzugsweise die gesamte in Fig. 8 gezeigte Gehäuserückseite des Steckergehäuses 35 und somit den Anschlussstecker 12 kabelseitig ab. Das Steckergehäuse 35 des Anschlusssteckers 12 ist vorzugsweise ebenfalls als 2K-Kunststoffteil mit einem als Axialdichtung wirkenden Dichtring 40 ausgeführte.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den im Anspruch 1 definierten Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den im Anspruch 1 definierten Gegenstand der Erfindung zu verlassen.

So kann bei einem Antriebssystem mit einer Anzahl von elektromotorischen Antrieben 1 und mindestens einer Hybridbrücke 2 die Hybridbrücke 2 mit einem Hybridkabel 33 als Flachkabel ausgeführt sein. Ein Antrieb 1, eines erfindungsgemäßen Antriebssystems umfasst einen Antriebsgehäuseabschnitt 5, der eine satteldachartige Steckfläche 15 mit entsprechend (nach außen abfallend) geneigten Steckflächen 15a und 15b zum Hybridsteckeranschluss aufweist. Dadurch ist zwischen zwei hybridkabelseitigen Anschlusssteckern 12 in deren Steckverbindung mit einem antriebsseitigen Gegensteckerpaar 11 ein spitzer Winkel 17 gebildet. Zweckmäßigerweise weist ein motorgehäuseseitiger Anschlussabschnitt 5a des Antriebs- bzw. Motorgehäuses 5, 5a die dachartige Gesamtsteckfläche 15 mit den beiden Steckflächen 15a, 15b derart auf, dass deren Flächennormalen zueinander V- oder keilförmig verlaufen.

Ferner umfasst der erfindungsgemäße Antrieb 1 ein leiterplattenseitig montiertes Gegensteckergehäuse 10. Darin können Stromschienen 24 zur Durchkontaktierung von Stromanschlüssen 20 und/oder Datenübertragungsanschlüssen 22 zwischen zwei Gegensteckern 11a, 11b, die zur Steckverbindung mit hybridkabelendseitig montierten Anschlusssteckern 12 vorgesehen und eingerichtet sind, integriert sein.

Die Hybridbrücke 2 kann mit einem bogenförmigen, mit zueinander V-förmig oder keilförmig verlaufenden Bogenschenkeln 34 ausgebildeten Hybridkabel 33 und mit kabelendseitig einem oder jeweils einem Anschlussstecker 12 mit in einem Steckergehäuse 35 angeordneten Anschlusskontakten 37 zur Stromführung und/oder Datenübertragung ausgeführt sein. In vorteilhafter Ausgestaltung ist das Steckergehäuse 35 als insbesondere einteiliges Kunststoffgehäuse mit einer Anzahl von Gehäusekammern 36 zur Aufnahme des oder jedes Anschluss- oder Steckkontaktes 37 ausgeführt. Geeigneterweise ist das Steckergehäuse 35 im Wesentlichen rechteckig, insbesondere mit einem im Wesentlichen Gehäusequerschnitt, ausgeführt.
Zusätzlich oder alternativ ist das Hybridkabel 33 kabelendseitig mit einer zur Abdichtung und/oder als Zugentlastung wirksamen Umspritzung 38 versehen, welche sich vorzugsweise in das Steckergehäuse 35 hinein erstreckt und/oder dieses zumindest bereichsweise um- oder übergreift. Ein Hybridsteckersystem mit einer solchen Hybridbrücke 2 und mit einem solchen Gegensteckerpaar 11, dessen Gegenstecker 11a, 11b vorzugsweise ebenfalls mit Gehäusekammern 19 für elektrischen strom und/oder Daten führenden Anschlüssen 20, 21, 22 ausgeführt sind, stellt ebenfalls eine Ausführungsvariante dar.

### Bezugszeichenliste

- 1: Antrieb
- 2: Hybridbrücke
- 3: Antriebsgehäuse
- 3a: Motorgehäuse
- 3b: Elektronikgehäuse
- 4: Motorstirnseite / Lagerdeckel
- 5: Anschlussgehäuseabschnitt /-bereich
- 5a: Anschlussabschnitt
- 5b: Gehäuseabschnitt
- 6: Antriebslängsseite
- 7: Gehäuselängsseite
- 8: Leiterplatte
- 8a: Leiterplattenabschnitt
- 10: Gegensteckergehäuse
- 11: Gegensteckerpaar
- 11a: Gegenstecker
- 11b: Gegenstecker
- 12: Anschlussstecker
- 13: Zwischenspalt
- 14: Steckrichtung
- 15: Gesamtsteckfläche
- 15a: Steckfläche
- 15b: Steckfläche
- 16: Steckflächenwinkel
- 17: Zwischenspaltwinkel
- 18: Leistungsteil
- 19: Gehäusekammer
- 20: stromführender Anschluss / Stromanschluss
- 21: Reserveanschluss
- 22: Datenübertragungsanschluss
- 24: Stromschiene
- 25: Stromschienenabschnitt
- 26: Leiterplattenanschluss
- 28: Axialdichtung
- 29: Radialdichtung
- 30: Schraubenlasche
- 31: Schraubenlasche
- 32: Schraube
- 33: Hybrid- / Flachkabel
- 34: Bogenschenkel
- 35: Steckergehäuse
- 36: Gehäusekammer
- 37: Steckerkontakt
- 38: Dichtmanschette / Umspritzung
- 39: Aussparung
- 40: Dichtring / Axialdichtung

- B: Motorstirnseite
- K: Anschlusskontakt

## Patentansprüche

1. Antriebssystem mit einer Anzahl von elektromotorischen Antrieben (1), die oder deren Elektronik über eine Hybridbrücke (2) mit einem Hybridkabel (33) und mit einem kabelendseitigen Anschlussstecker (12) zur Stromführung und Datenübertragung miteinander verbunden oder verbindbar sind,
- wobei der jeweilige Antrieb (1) ein Antriebsgehäuse (3) umfasst, das aus einem Motorgehäuse (3a) zur Aufnahme des Elektromotors und/oder dessen Motorkomponenten und einem Umrichter- oder Elektronikgehäuse (3b) zur Aufnahme einer Leiterplatte (8) einer Leistungs- und/oder Steuerelektronik zusammengesetzt ist,
- wobei das Umrichter- oder Elektronikgehäuse (3b) des jeweiligen Antriebs (1) dessen Motorgehäuse (3a) stirnseitig mit einem Gehäuseabschnitt (5b) überragt, in welchem die Leiterplatte (8) mit einem Leiterplattenabschnitt (8a) einliegt, auf dem ein Gegensteckergehäuse (10) eines Gegensteckerpaars (11) montiert ist, deren Gegenstecker (11a, 11b) zur Steckverbindung mit dem oder jedem hybridkabelseitig montierten Anschlussstecker (12) vorgesehen und eingerichtet sind,
- wobei die Gegenstecker (11a, 11b) des Gegensteckerpaares (11) leiterplattenseitig kontaktierte Stromanschlüsse (24) oder leiterplattenseitig kontaktierte Daten- und/oder Signalanschlüsse (21, 22) oder leiterplattenseitig kontaktierte Strom- und Daten- bzw. Signalanschlüssen (21, 22) aufweisen, und
- wobei der Gehäuseabschnitt (5b) des Umrichter- oder Elektronikgehäuses (3b) und ein diesen Gehäuseabschnitt (5b) überdeckender Anschlussabschnitt (5a) des Motorgehäuses (3a) einen stufenartig abgesetzten Gehäusebereich (5) des Antriebsgehäuses (3) bilden,
**dadurch gekennzeichnet, dass**
der
Gehäusebereich (5) eine dachartige Steckfläche (15) für die Steckverbindung des hybridkabelseitigen Anschlusssteckers (12) mit dem Gegenstecker (11a, 11b) des antriebsseitigen Gegensteckerpaares (11) aufweist, wobei der motorgehäuseseitige Anschlussabschnitt (5a) anschluss- und/oder steckerseitig unter Bildung zweier Steckflächenbereiche (15a, 15b) mit einander abgeneigten Flächennormalen die Steckfläche (15) mit einem stumpfen Winkel (16) derart aufweist, dass zwischen zwei hybridkabelseitigen Anschlusssteckern (12) in deren Steckverbindung mit dem Gegensteckerpaar (11) ein spitzer Winkel (17) gebildet ist.

2. Antriebssystem nach Anspruch 1,
**dadurch gekennzeichnet,**
**dass** leiterplattenseitig kontaktierte Leiterplattenanschlüsse (26) von stromführenden Anschlüssen (20) als Bestandteil von Stromschienen (24) und/- oder die leiterplattenseitig kontaktierte Daten- und/oder Signalanschlüsse (21, 22) des Gegensteckerpaars (11) aus dem Gegensteckergehäuse (10) auf dessen dem Leiterplattenabschnitt (8a) zugewandten Gehäuserückseite herausragen,
- wobei die jeweilige Stromschiene (24) einen als Durchkontaktierung zwischen den beiden Gegensteckern (11a, 11b) dienenden Stromschienenabschnitt (25) mit endseitig den Anschlüssen (20) aufweist, zwischen denen auf der gegenüberliegenden Seite des Stromschienenabschnitts (25) der jeweilige Leiterplattenanschluss (26) vorgesehen ist.

3. Antriebssystem nach Anspruch 1 oder 2,
**dadurch gekennzeichnet,**
**dass** das Umrichter- und/oder Elektronikgehäuse (3a) als Gehäusehalbschale oder halbschalenartig ausgeführt ist.

4. Antriebssystem nach Anspruch 2, **dadurch gekennzeichnet,**
**dass** die Stromschienen (24) in das Gegensteckergehäuse (10) des Gegensteckerpaars (11) integriert sind.

5. Antriebssystem nach nach einem der Ansprüche 1 bis 4,
**dadurch gekennzeichnet,**
**dass** der motorgehäuseseitige Anschlussabschnitt (5a) anschluss- und/oder steckerseitig im Bereich der dachartig ausgebildeten Steckfläche (15) vom Gegensteckerpaar (11) durchgriffen ist.

6. Antriebssystem nach einem der Ansprüche 1 bis 5,
**dadurch gekennzeichnet,**
**dass** das Gegensteckerpaar (11) über den motorgehäuseseitigen Anschlussabschnitt (5a) zur Steckverbindung mit den einzeln oder paarweise steckbaren hybridkabelseitigen Anschlusssteckern (12) zugänglich ist.

7. Antriebssystem nach einem der Ansprüche 1 bis 6,
**dadurch gekennzeichnet,**
**dass** der Anschlussstecker (12) kabelendseitig des Hybridkabels (33) der Hybridbrücke (2) in einem Steckergehäuse (35) angeordnete, aufgenommene und/oder integrierte Anschlusskontakte (37) zur Stromführung und Datenübertragung aufweist,
- wobei das Hybridkabel (33) als Flachkabel ausgeführt und bogenförmig, insbesondere mit zueinander V-förmig oder keilförmig verlaufenden Bogenschenkeln, ausgebildet oder in diese Bogenform verbringbar ist.

8. Antriebssystem nach Anspruch 7,
**dadurch gekennzeichnet,**
**dass** das Steckergehäuse (35) als Kunststoffgehäuse mit einer Anzahl von Gehäusekammern (36) zur Aufnahme des oder jedes Anschluss- oder Steckkontaktes (37) zur Stromführung und/oder zur Datenübertragung ausgeführt ist.

9. Antriebssystem nach Anspruch 7 oder 8,
**dadurch gekennzeichnet,**
**dass** das Hybridkabel (33) kabelendseitig mit einer zur Abdichtung und/oder als Zugentlastung wirksamen Umspritzung (38), insbesondere Kunststoffumspritzung, versehen ist, welche sich in das Steckergehäuse (35) hinein erstreckt und dieses zumindest bereichsweise um- und/oder übergreift.

## Claims

1. Drive system with a plurality of electromotive drives (1), which or the electronics of which are mutually connected or connectable by means of a hybrid bridge (2) with a hybrid cable (33) and with a plug-in connector (12) on the cable termination side for power conduction and data transmission,
- wherein the respective drive (1) comprises a drive housing (3) which is composed of a motor housing (3a) for the accommodation of the electric motor and/or the motor components thereof, and a converter or electronics housing (3b) for the accommodation of a printed circuit board (8) for power and/or control electronics,
- wherein the converter or electronics housing (3b) of the respective drive (1) projects above the motor housing (3a) on the end face thereof in the form of a housing section (5b) in which the printed circuit board (8) with a printed circuit board section (8a) is accommodated and on which a mating connector housing (10) of a mating connector set (11) is mounted, the mating connectors (11a, 11b) thereof being provided and configured for plug-in connection with the or each plug-in connector (12) mounted on the hybrid cable side,
- wherein the mating connectors (11a, 11b) of the mating connector set (11) have printed circuit board-side contacting power terminals (24) or printed circuit board-side contacting data and/or signal terminals (21, 22) or printed circuit board-side contacting power and data and/or signal terminals (21, 22), and
- wherein the housing section (5b) of the converter or electronics housing (3b) and a terminal section (5a) of the motor housing (3a) which overlaps the said housing section (5b) form a housing region (5) of the drive housing (3) in a stepped arrangement,
**characterized in that**
the housing region (5) has a roof-shaped contact surface (15) for the plug-in connection of the hybrid cable-side plug-in connector (12) with the mating connector (11a, 11b) of the drive-side mating connector set (11), wherein the motor housing-side terminal section (5a), on the terminal and/or connector side, for the formation of two contact surface regions (15a, 15b) with mutually disinclined surface normals, has the contact surface (15) with an obtuse angle (16) such that an acute angle (17) is formed between two hybrid cable-side plug-in connectors (12) at the plug-in connection thereof to the mating connector set (11).

2. Drive system according to Claim 1,
**characterized**
**in that** printed circuit board-side contacting printed circuit board terminals (26) of current-carrying terminals (20) as constituent elements of conductor rails (24) and/or the printed circuit board-side contacting data and/or signal terminals (21, 22) of the mating connector set (11) project from the mating connector housing (10) on the reverse side of the said housing facing the printed circuit board section (8a),
- wherein the respective conductor rail (24) has a conductor rail section (25) for the through-connection of the two mating connectors (11a, 11b) with the terminals (20) mounted at the end, the respective printed circuit board terminal (26) being provided between the said terminals on the opposite side of the conductor rail section (25).

3. Drive system according to Claim 1 or 2,
**characterized**
**in that** the converter and/or electronics housing (3a) is configured as a half-shell housing or half-shell-type housing.

4. Drive system according to Claim 2,
**characterized**
**in that** the conductor rails (24) are integrated in the mating connector housing (10) of the mating connector set (11).

5. Drive system according to one of Claims 1 to 4,
**characterized**
**in that** the motor housing-side terminal section (5a), on the terminal and/or connector side, in the region of the roof-shaped contact surface (15), is penetrated by the mating connector set (11).

6. Drive system according to one of Claims 1 to 5,
**characterized**
**in that** the mating connector set (11) is accessible via the motor housing-side terminal section (5a) for plug-in connection with the individual or paired pluggable plug-in connectors (12) on the hybrid cable side.

7. Drive system according to one of Claims 1 to 6,
**characterized**
**in that** the plug-in connector (12), on the cable termination side of the hybrid cable (33) of the hybrid bridge (2), has terminal contacts (37) for power conduction and data transmission arranged, accommodated and/or integrated in a connector housing (35),
- wherein the hybrid cable (33) is configured as a flat cable and is configured in an arc shape, specifically with mutually V-shaped or wedge-shaped haunches, or can be formed into this arc shape.

8. Drive system according to Claim 7,
**characterized**
**in that** the connector housing (35) is configured as a plastic housing with a plurality of housing chambers (36) for the accommodation of the or of each terminal or plug-in contact (37) for power conduction and/or for data transmission.

9. Drive system according to Claim 7 or 8,
**characterized**
**in that** the hybrid cable (33) is provided with a moulding (38) on its cable termination side, specifically configured as a plastic moulding, for the purposes of sealing and/or strain relief, which extends into the connector housing (35) and at least partially encloses and/or overreaches the latter.

## Revendications

1. Système d'entraînement comprenant une pluralité de mécanismes d'entraînement (1) électromotorisés, lesquels ou l'électronique desquels est/sont reliée/reliés ou peut/peuvent être reliée/reliés ensemble par le biais d'un pont hybride (2) avec un câble hybride (33) et avec une fiche de raccordement (12) du côté de l'extrémité du câble servant à la conduction de courant et à la transmission de données,
- le mécanisme d'entraînement (1) respectif comportant un carter de mécanisme d'entraînement (3) qui est constitué d'un carter de moteur (3a) destiné à accueillir le moteur électrique et/ou ses composants de moteur et d'un boîtier de convertisseur ou électronique (3b) destiné à accueillir un circuit imprimé (8) d'une électronique de puissance et/ou de commande,
- le boîtier de convertisseur ou électronique (3b) du mécanisme d'entraînement (1) respectif faisant saillie de son carter de moteur (3a) du côté frontal avec une portion de boîtier (5b) dans laquelle repose le circuit imprimé (8) avec une portion de circuit imprimé (8a) sur laquelle est monté un boîtier de fiche homologue (10) d'une paire de fiches homologues (11) dont les fiches homologues (11a, 11b) sont prévues et conçues pour la connexion par enfichage avec la ou chaque fiche de raccordement (12) montée du côté du câble hybride,
- les fiches homologues (11a, 11b) de la paire de fiches homologues (11) possédant des bornes électriques (24) mises en contact du côté du circuit imprimé ou des bornes de données et/ou de signal (21, 22) mises en contact du côté du circuit imprimé ou des bornes électriques et de données ou de signal (21, 22) mises en contact du côté du circuit imprimé, et
- la portion de boîtier (5b) du boîtier de convertisseur ou électronique (3b) et une portion de raccordement (5a) du carter de moteur (3a) qui recouvre cette portion de boîtier (5b) formant une zone de carter (5) étagée du carter de mécanisme d'entraînement (3),
**caractérisé en ce que**
la zone de carter (5) possède une surface d'enfichage (15) en forme de toit pour la connexion par enfichage de la fiche de raccordement (12) du côté du câble hybride avec la fiche homologue (11a, 11b) de la paire de fiches homologues (11) du côté du mécanisme d'entraînement, la portion de raccordement (5a) du côté du carter de moteur possédant du côté du raccordement et/ou de la fiche, en formant deux zones de surface d'enfichage (15a, 15b) ayant des normales à la surface inclinées l'une par rapport à l'autre, la surface d'enfichage (15) avec un angle obtus (16) de telle sorte qu'un angle aigu (17) est formé entre deux fiches de raccordement (12) du côté du câble hybride dans leur connexion par enfichage avec la paire de fiches homologues (11).

2. Système d'entraînement selon la revendication 1, **caractérisé en ce que** des bornes de circuit imprimé (26) mises en contact du côté du circuit imprimé font saillie de bornes de conduite de courant (20) faisant partie intégrante de barres-bus (24) et/ou les bornes de données et/ou de signal (21, 22) mises en contact du côté du circuit imprimé de la paire de fiches homologues (11) font saillie du boîtier de fiche homologue (10) sur son côté arrière de boîtier qui fait face à la portion de circuit imprimé (8a),
- la barre-bus (24) respective possédant une portion de barre-bus (25) servant de contact traversant entre les deux fiches homologues (11a, 11b) et pourvue de bornes (20) côté extrémité, entre lesquelles se trouve la borne de circuit imprimé (26) respective sur le côté opposé de la portion de barre-bus (25).

3. Système d'entraînement selon la revendication 1 ou 2, **caractérisé en ce que** le boîtier de convertisseur et/ou électronique (3a) est réalisé sous la forme d'une demi-coque de boîtier ou à la manière d'une demi-coque.

4. Système d'entraînement selon la revendication 2, **caractérisé en ce que** les barres-bus (24) sont intégrées dans le boîtier de fiche homologue (10) de la paire de fiches homologues (11).

5. Système d'entraînement selon l'une des revendications 1 à 4, **caractérisé en ce que** la portion de raccordement (5a) du côté du carter de moteur est traversée par la paire de fiches homologues (11) du côté du raccordement et/ou de la fiche, dans la zone de la surface d'enfichage (15) réalisée en forme de toit.

6. Système d'entraînement selon l'une des revendications 1 à 5, **caractérisé en ce que** la paire de fiches homologues (11) est accessible par le biais de la portion de raccordement (5a) du côté du carter de moteur en vue de la connexion par enfichage avec les fiches de raccordement (12) du côté du câble hybride enfichables individuellement ou par paire.

7. Système d'entraînement selon l'une des revendications 1 à 6, **caractérisé en ce que** la fiche de raccordement (12) possède des contacts de raccordement (37) servant à la conduction de courant et à la transmission de données disposés, accueillis et/ou intégrés dans un boîtier de fiche (35) du côté de l'extrémité de câble du câble hybride (33) du pont hybride (2),
- le câble hybride (33) étant réalisé sous la forme d'un câble plat et étant configuré en forme d'arc, notamment avec des branches d'arc qui s'étendent en forme de V ou en forme de clavette l'une par rapport à l'autre, ou pouvant être amené dans cette forme d'arc.

8. Système d'entraînement selon la revendication 7, **caractérisé en ce que** le boîtier de fiche (35) est réalisé sous la forme d'un boîtier en matière plastique avec une pluralité de chambres de boîtier (36) destinées à accueillir le ou chaque contact de raccordement ou à enficher (37) en vue de la conduction de courant et/ou de la transmission de données.

9. Système d'entraînement selon la revendication 7 ou 8, **caractérisé en ce que** le câble hybride (33) est pourvu du côté de l'extrémité du câble d'un surmoulage (38), notamment d'un surmoulage en matière plastique, agissant en vue d'assurer l'étanchéité et/ou comme antitraction, lequel s'étend à l'intérieur du boîtier de fiche (35) et entoure et/ou recouvre celui-ci au moins dans certaines zones.
